# EUROPÄISCHE PATENTANMELDUNG

(11) **EP 2 156 947 A1**
(43) Veröffentlichungstag der Anmeldung: **24.02.2010**
(21) Anmeldenummer: 08014652.5
(22) Anmeldetag: 18.08.2008
(51) Int. Cl.: B32B 23/08, B32B 27/08, B65B 9/20

(54) **Verbundmaterial und Verfahren zur Herstellung eines gefüllten Schlauchbeutels**

(71) Anmelder: Ludger Fuest, 53881 Euskirchen (DE)
(72) Erfinder: Fink, Bernhard, 1060 Wien (AT); Washüttl, Michael, Dr., 1130 Wien (AT); Krainz, Michael, 1180 Wien (AT)
(74) Vertreter: Grünecker, Kinkeldey, Stockmair & Schwanhäusser Anwaltssozietät

(57) **Zusammenfassung**

Die vorliegende Erfindung betrifft ein Verbundmaterial bestehend aus einer Verbundfolie zur Herstellung eines Schlauchbeutels (7) nach einem Form-Fill-Seal-Verfahren oder aus einem Kartonverbund. Mit der vorliegenden Erfindung soll ein Verbundmaterial angegeben werden, das sich durch Wärmestrahlungs- oder Mikrowellenbeaufschlagung umformen lässt und nach entsprechender Beaufschlagung einen hinreichend formstabilen, vorzugsweise dreidimensionalen Zustand einnimmt, so dass Verpackungen oder andere Artikel in der gewünschten Form herstellbar sind. Im Hinblick darauf wird mit der vorliegenden Erfindung ein Verbundmaterial bestehend aus einer Verbundfolie (1) oder aus einem Kartonverbund vorgeschlagen, das eine erste Lage (2), einen strahlungsempfindlichen Werkstoff (3) und eine zweite Lage (4) umfasst, die mit der ersten Lage (2) über einen wärmeempfindlichen Kaschierkleber verbunden ist, der in einem Bereich des strahlungsempfindlichen Werkstoffes (3) und/oder in einem von dem strahlungsempfindlichen Werkstoff (3) ausgesparten Bereich vorgesehen ist und bei Wärmezufuhr durch Wärmestrahlungs- oder Mikrowellenbeaufschlagung eine erhöhte Klebewirkung ausbildet.

## Beschreibung

Die vorliegende Erfindung betrifft ein Verbundmaterial bestehend aus einer Verbundfolie zur Herstellung eines Schlauchbeutels nach einem Form-Fill-Seal-Verfahren oder aus einem Kartonverbund, wobei das Verbundmaterial eine erste Lage, einen strahlungsempfindlichen Werkstoff und eine zweite Lage aufweist, die mit der ersten Lage über einen Kaschierkleber verbunden ist, sowie ein Form-Fill-Seal-Verfahren, das Verbundmaterial bestehend aus einer solchen Verbundfolie zur Herstellung eines Schlauchbeutels verwendet.

Ein mit dem vorbezeichneten, allgemein bekannten Form-Fill-Seal-Verfahren hergestellter Schlauchbeutel findet beispielsweise in der Verpackungstechnik zur Verpackung von Lebensmitteln oder anderen granularen Materialien Verwendung. Die DE 33 45 459 bzw. die US 4,288,965 offenbaren zur Durchführung des Form-Fill-Seal-Verfahrens geeignete Vorrichtungen. Ein derart hergestellter Schlauchbeutel kann beispielsweise mikrowellengeeignet sein, um darin verpackte Lebensmittel ohne vorheriges mühsames Entfernen der Verpackung in einem Mikrowellenofen erwärmen zu können. Für die Herstellung solch eines Schlauchbeutels kommen üblicherweise ein- oder mehrlagige Folien zum Einsatz, die einen mikrowellenempfindlichen Werkstoff umfassen. Ein mikrowellenempfindlicher Werkstoff ist im allgemeinen ein Werkstoff, der bei Mikrowellenbeaufschlagung durch die auf den Werkstoff einwirkende Mikrowellen derart angeregt wird, dass dieser Wärme erzeugt und die Wärme unmittelbar an seine Umgebung abgibt. Solche Werkstoffe werden auch als Suszeptoren bezeichnet.

Aus der US 5,308,945 ist beispielsweise eine zur Herstellung einer Lebensmittelverpackung geeignete mehrlagige Folie bekannt, die einen mikrowellenempfindlichen Werkstoff umfasst. Dieser Werkstoff ist vorgesehen, eine Bräunung des verpackten Lebensmittels aufgrund seiner Eigenschaft einer Wärmeabstrahlung mit einer entsprechend hohen Temperatur bei Mikrowellenbeaufschlagung zu erreichen. Die Wärmeabstrahlung des mikrowellenempfindlichen Werkstoffes wird gleichfalls dazu genutzt, eine den Werkstoff als Träger dienende Folienlage, welche insbesondere ein orientiertes Polyester ist, im Bereich des mikrowellenempfindlichen Werkstoffes bei Mikrowellenbeaufschlagung durch Rückstellung der Orientierung derart zu schrumpfen, dass eine Temperatur im Bereich des strahlungsempfindlichen Werkstoffs schneller ansteigen und nach Erreichen eines vorbestimmten Temperaturlevels konstant gehalten werden kann. Die orientierte Polyesterlage wird dazu mit einem einen mikrowellenempfindlichen Werkstoff enthaltenen, wärmestabilen Klebemittel beschichtet, das seine Klebeigenschaft gegenüber der Wärmeabstrahlung des mikrowellenempfindlichen Werkstoffs bei Mikrowellenbeaufschlagung weitestgehend beibehält. Die so beschichtete Lage wird über ein ähnliches oder gleiches wärmestabiles Klebemittel ohne mikrowellenempfindliche Werkstoffanteile auf einen thermisch stabilen Träger wie Papier oder Karton aufgetragen, der bei Wärmeabstrahlung des mikrowellenempfindlichen Werkstoffes frei von Schrumpfungen bleibt. Das zwischen der Polyesterlage und dem Träger verwendete Klebemittel weist zudem die Eigenschaft auf, eine Schrumpfung der Polyesterlage bei Mikrowellenbeaufschlagung in vorbestimmter Weise zuzulassen. Mit solch einer Folie sollen verpackte Lebensmittel schnell, gleichmäßig und mit einer gewissen Bräunung erwärmt werden können.

Bei dem gattungsgemäßen Stand der Technik wird jedoch eine Steifigkeit bzw. Stabilität einer aus der vorbekannten Folie hergestellten Verpackung während und/oder nach Mikrowellenbeaufschlagung vollkommen außer Acht gelassen. So kann es den aus solchen Folien hergestellten Verpackungen an einer notwendigen Stabilität nach Mikrowellenbeaufschlagung fehlen, um insbesondere nach Öffnen der Verpackung als hinreichend formstabiles Behältnis zur Aufnahme von Schüttgut oder bei einer Verwendung als Lebensmittelverpackung als hinreichend formstabiles Darreichungsbehältnis zu dienen.

Eine Aufgabe der vorliegenden Erfindung ist es, ein Verbundmaterial bestehend aus einer Verbundfolie zur Herstellung eines Schlauchbeutels nach einem Form-Fill-Seal-Verfahren oder aus einem Kartonverbund bereitzustellen, wobei sich das Verbundmaterial durch Wärmezufuhr, insbesondere durch Wärmestrahlungs- oder Mikrowellenbeaufschlagung umformen lässt und nach entsprechender Beaufschlagung einen hinreichend formstabilen, vorzugsweise dreidimensionalen Zustand einnimmt, so dass Verpackungen oder andere Artikel in einer gewünschten Form herstellbar sind.

Im Hinblick auf diese Aufgabe wird mit der vorliegenden Erfindung ein Verbundmaterial vorgeschlagen, die eine erste Lage, einen strahlungsempfindlichen Werkstoff und eine zweite Lage umfasst, die mit der ersten Lage über einen wärmeempfindlichen Kaschierkleber verbunden ist. Der strahlungsempfindliche Werkstoff ist so ausgewählt, dass sich bei Wärmestrahlungsbeaufschlagung, beispielsweise durch Warmluftzufuhr in einen Backofen, der Werkstoff vorzugsweise in einem stärkeren Maße als die erste und zweite Lage erwärmt und diese Wärme unmittelbar an seine Umgebung abgeben kann. Der strahlungsempfindliche Werkstoff kann weiterhin alternativ oder zusätzlich derart ausgelegt sein, dass der Werkstoff durch die bei Mikrowellenbeaufschlagung einwirkenden Mikrowellen angeregt wird, dadurch Wärme erzeugt und die Wärme unmittelbar an seine Umgebung abgibt. Der strahlungsempfindliche Werkstoff kann Bestandteil der ersten oder zweiten Lage oder eine separate, mit der ersten oder der zweiten Lage verbundene Schicht sein.

Ein wärmeempfindlicher Kaschierkleber ist im Sinne der vorliegenden Erfindung ein Klebemittel, das unter Wärmeeinwirkung seine Klebewirkung durch eine Vernetzungsreaktion zwischen insbesondere seiner Oberflächenmoleküle und denen der zu verbindenden Lagen derart entfaltet, dass sich die Klebewirkung bei Wärmezufuhr im Vergleich zu seiner Klebewirkung vor Wärmezufuhr in vorbestimmter Weise erhöht. Dadurch kann im Bereich des Kaschierklebers eine verbesserte Steifigkeit zwischen der ersten und zweiten Lage während einer Wärmeeinwirkung erzielt werden, wodurch das Verbundmaterial, insbesondere das aus der Verbundfolie bestehende Verbundmaterial bereits bei der Wärmestrahlungs- und/oder Mikrowellenbeaufschlagung einen erheblich stabileren Verbund, wie beispielsweise ein hinreichend formstabiles Behältnis für Lebensmittel oder andere Artikel, ausbilden kann. Der wärmeempfindliche Kaschierkleber ist dabei in einem Bereich des strahlungsempfindlichen Werkstoffes vorgesehen. Die Verwendung des wärmeempfindlichen Kaschierklebers in diesen Bereichen erlaubt ein bei Wärmestrahlungs- und/oder Mikrowellenbeaufschlagung zügiges Erreichen einer erforderlichen Festigkeit bzw. Stabilität. Alternativ kann der wärmeempfindliche Kaschierkleber in einem von dem strahlungsempfindlichen Werkstoff ausgesparten Bereich vorgesehen sein. Dadurch kann auf einfache Weise eine zeitliche Verzögerung der eintretenden Steifigkeit im Vergleich zu der vorgenannten Alternative erreicht werden, womit eine erforderliche Festigkeit verschiedener Bereiche des auszubildenden Behältnisses optimal aufeinander abstimmbar wird. Weiterhin kann die von dem strahlungsempfindlichen Werkstoff abgestrahlte Wärme ohne einen durch den Kaschierkleber bedingten Wärmeverlust zu der ersten Lage durchdringen und in einen vorbestimmten Bereich der Verpackung, beispielsweise zur Bräunung von Lebensmitteln, abstrahlen. Auch ist es möglich, den wärmeempfindlichen Kaschierkleber vollflächig vorzusehen. Mit anderen Worten wird der wärmeempfindliche Kaschierkleber in einem Bereich des strahlungsempfindlichen Werkstoffes und in einem von dem strahlungsempfindlichen Werkstoff ausgesparten Bereich vorgesehen. Damit wird auf einfache Weise eine erhöhte Steifigkeit über die gesamte Fläche der Verbundfolie erzielt.

Nach einer bevorzugten Ausgestaltung der vorliegenden Erfindung ist die erste Lage eine wärmeschrumpfbare Lage und die zweite Lage.eine passive Lage, die miteinander derart verbunden sind, dass das Verbundmaterial bei Wärmestrahlungs- oder Mikrowellenbeaufschlagung in vorbestimmter Weise umformbar ist. Als wärmeschrumpfbare Lage wird insbesondere ein gereckter Thermoplast angesehen, der eingefrorene Orientierungen aufweist. Die wärmeschrumpfbare Lage und der strahlungsempfindliche Werkstoff sind vorzugsweise so aufeinander abgestimmt, dass eine Erwärmung des strahlungsempfindlichen Werkstoffes zu einer Rückstellung der eingefrorenen Orientierungen führt, ohne dass die Verbundfolie aufschmilzt, jedoch zu einem solchen Grad, dass sich die Verbundfolie vorzugsweise makroskopisch verformen und versteifen kann. Die Wärmestrahlungs- oder Mikrowellenbeaufschlagung führt dementsprechend dazu, dass die wärmeschrumpfbare Lage des Verbundmaterials im Bereich des strahlungsempfindlichen Werkstoffes in vorbestimmter Weise umgeformt wird. Diese Umformung führt zu einer Verspannung des gesamten Verbundmaterials und somit zu einer Versteifung desselben, welcher über die erhöhte Klebewirkung des wärmeempfindlichen Kaschierklebers nach Wärmeinwirkung weiter stabilisiert wird.

Die passive Lage ist im Sinne der vorliegenden Erfindung eine im wesentlichen wärmestabile Lage, die bei der zu erwartenden Erwärmung des strahlungsempfindlichen Werkstoffes jedenfalls nicht in einem Maße wie die wärmeschrumpfbare Lage verformt wird. Die passive Lage kann daher einer weiteren Versteifung insbesondere des aus der Verbundfolie bestehenden Verbundmaterials dienen. Es können weitere passive Lagen vorgesehen sein, die vorzugsweise den an eine Lebensmittelverpackung gestellten sonstigen Anforderungen gerecht werden, wie beispielsweise Feuchtigkeitsschutz, UV-Schutz und mechanischer Schutz.

Eine wie vorerwähnt beschriebene, nicht vollflächige Anordnung des wärmeempfindlichen Kaschierklebers zwischen der wärmeschrumpfbaren und der passiven Lage des Verbundmaterials erlaubt einen entsprechenden Schrumpf bzw. im Sinne der vorliegenden Erfindung verstandene Verformung der wärmeschrumpfbaren Lage in den von dem wärmeempfindlichen Kaschierkleber ausgesparten Bereichen. Mit anderen Worten wird im Fall der Überdeckung des strahlungsempfindlichen Werkstoffes mit dem wärmeempfindlichen Kaschierkleber eine Verformung der wärmeschrumpfbaren Lage vorzugsweise in einem von dem strahlungsempfindlichen Werkstoff ausgesparten Bereich erreicht. Da sich der strahlungsempfindliche Werkstoff bei Wärmestrahlungs- oder Mikrowellenbeaufschlagung in einem schnelleren und stärkeren Maße als die übrigen Bereiche des Verbundmaterials erwärmt, kann eine erforderliche Steifigkeit im Bereich des strahlungsempfindlichen Werkstoffs vor Verformung der wärmeschrumpfbaren Lage in den von dem strahlungsempfindlichen Werkstoff ausgesparten Bereichen erzielt werden. Somit sind gezielte Verformungen der wärmeschrumpfbaren Lage in zu bereits versteiften benachbarten Bereichen möglich.

Bei Verwendung des wärmeempfindlichen Kaschierklebers in den von dem strahlungsempfindlichen Werkstoff ausgesparten Bereichen des Verbundmaterials verformt sich die wärmeschrumpfbare Lage im Bereich des strahlungsempfindlichen Werkstoffes, bevor sich die wärmeschrumpfbare und passive Lage in den diesen benachbarten Bereichen aufgrund der erhöhten Klebewirkung des wärmeempfindlichen Kaschierklebers durch Vernetzung weiter versteifen. Damit wird eine Verformung des Verbundmaterials vor Versteifung derselbigen erreicht, wodurch eine hinreichende Stabilität insbesondere des aus der Verbundfolie bestehenden verformten Verbundmaterials gewährleistbar ist.

Bei einer zu bevorzugenden vollflächigen Verwendung des wärmeempfindlichen Kaschierklebers und unter Berücksichtigung eines aufeinander abgestimmten Temperaturbereiches hinsichtlich der wärmeschrumpfbaren Lage, des strahlungsempfindlichen Werkstoffes und des wärmeempfindlichen Kaschierklebers kann eine Verformung und Versteifung insbesondere des aus der Verbundfolie bestehenden Verbundmaterials derart erreicht werden, dass sich die wärmeschrumpfbare Lage in dem Bereich des strahlungsempfindlichen Werkstoffes zunächst verformt und unmittelbar nach der Verformung durch die Vernetzung mit dem wärmeempfindlichen Kaschierkleber versteift. Eine Versteifung der übrigen Bereiche durch Vernetzung mit dem wärmeempfindlichen Kaschierkleber kann entweder gleichzeitig oder anschließend zu der Versteifung der wärmeschrumpfbaren Lage in dem Bereich des strahlungsempfindlichen Werkstoffes bewirkt werden. Vorzugsweise sind dazu die Reaktionstemperaturbereiche der wärmeschrumpfbaren Lage und des wärmeempfindlichen Kaschierklebers unter Berücksichtigung der Abstrahltemperatur des strahlungsempfindlichen Werkstoffes bei einer Wärmestrahlungs- oder Mikrowellenbeaufschlagung durch geeignete Materialauswahl aufeinander geeignet abzustimmen. Besonders bevorzugt werden dabei Temperatur und Material zwischen den vorgenannten Komponenten derart abgestimmt, dass vor einer Versteifung der wärmeschrumpfbaren Lage in dem von dem strahlungsempfindlichen Werkstoff ausgesparten Bereich eine Verformung der wärmeschrumpfbaren Lage in diesem Bereich erfolgt. Mit den vorgenannten Alternativen einer Verformung und Versteifung des erfindungsgemäßen Verbundmaterials kann ein hoher Freiheitsgrad an Gestaltungsmöglichkeiten beispielsweise für einen nach dem Form-Fill-Seal-Verfahren hergestellten Schlauchbeutel bereitgestellt werden.

Nach einer weiteren bevorzugten Ausgestaltung der vorliegenden Erfindung weist die wärmeschrumpfbare Lage mehrere Einschnitte und/oder Punktierungen auf. Damit kann die Wirkung des strahlungsempfindlichen Werkstoffes, nämlich die Wärmeerzeugung und/oder die Wärmeleitung, zeitverzögert werden. Somit sind vorbestimmte Faltungen des Verbundmaterials während der Wärmestrahlungs- oder Mikrowellenbeaufschlagung wiederholbar und nicht dem Zufall überlassen. Weiterhin ist die Verletzung der wärmeschrumpfbaren Folie vorzugsweise in einem Stanzvorgangsschritt beispielsweise zur Perforation des Verbundmaterials an vordefinierten Stellen integrierbar, wodurch insbesondere ein zusätzlicher Arbeitsaufwand für die Herstellung eines aus dem aus der Verbundfolie bestehenden Verbundmaterial hergestellten Schlauchbeutels vermieden werden kann.

Gemäß einer weiteren bevorzugten Ausgestaltung der vorliegenden Erfindung ist das Verbundmaterial aus einem Kartonverbund ausgeformt, wobei die passive Lage eine Karton- und/oder Papierlage und die wärmeschrumpfbare Lage eine Folienlage ist. Vorzugsweise weist die Karton- und/oder Papierlage wenigstens einen Einschnitt und/oder Punktierungen auf. Dieser Einschnitt und/oder die Punktierungen definieren vorbestimmte Verformungspunkte, um welche sich das aus dem Kartonverbund bestehende Verbundmaterial bei einer Wärmestrahlungs- oder Mikrowellenbeaufschlagung wegen des Zusammenziehens der wärmeschrumpfbaren Lage durch Schrumpfung verformt. Die Einschnitte können beispielsweise durch einen Stanzvorgang erzeugte Stanzungen oder Rillungen sein. Eine vorbestimmte Anordnung der Einschnitte und/oder Punktierungen erlaubt daher eine gewünschte Verformung des aus dem Kartonverbund bestehenden Verbundmaterials, womit sich insbesondere Werbeartikel und/oder Dekorationsartikel herstellen lassen. Auch kann durch die vorbestimmte Verformung aufgrund vordefiniert gewählter Verformungspunkte des aus dem Kartonverbund bestehenden Verbundmaterials eine solche Verpackung auf einfache Art und Weise bereitgestellt werden, die in der Lage ist, sich während der Wärmezufuhr an das Füllgut derart anzulegen, dass die von dem strahlungsempfindlichen Werkstoff ausgehende Wärme auf das Füllgut übertragen wird und so beispielsweise eine knusprige Außenseite des Füllgutes schafft.

Nach einer bevorzugten Weiterbildung der vorliegenden Erfindung ist der strahlungsempfindliche Werkstoff aus einer Metallpartikel aufweisende Schicht und/oder aus einer Druckschicht ausgebildet und vorzugsweise der ersten Lage zugeordnet. Der strahlungsempfindliche Werkstoff kann somit den unterschiedlichen Anforderungen an die aus der erfindungsgemäßen Verbundfolie hergestellten Verpackung gerecht werden. So kann die erste Lage beispielsweise mit der Metallpartikel aufweisende Schicht durch ein allgemein bekannten Metallisierungsprozess wie das Bedampfungsverfahren versehen werden. Metallpartikel im Sinne der vorliegenden Erfindung sind alle Partikel, die geeignet sind, durch Mikrowellenenergie angeregt zu werden, um Wärme zu erzeugen und diese unmittelbar abzugeben. Für eine Wärmestrahlungsbeaufschlagung kommen auch solche Metallpartikel in Betracht, die sich durch Wärmestrahlung zügig erwärmen und die Wärme unmittelbar abgeben.

Bei der als Druckschicht bevorzugten Weiterbildung kann der strahlungsempfindliche Werkstoff über ein übliches Bedruckungsverfahren auf die erste Lage aufgebracht werden, wobei die Druckschicht beispielsweise eine farbpigmenthaltige Druckschicht sein kann und wobei die Druckschicht vorzugsweise wenigstens eine der folgenden Komponenten umfasst: Metallpartikel, elektrisch leitfähige Materialien wie beispielsweise Kohlenstoff, eine Kombination von Nichtleitern und Leitern wie beispielsweise Minatec 60 CM (Fa. Merck), Halbleiter, Dipole ausbildende Materialien wie beispielsweise Wasser oder mikroinkapsulierte Öle, die geeignet sind, Wärmestrahlung oder Mikrowellenenergie derart aufzunehmen und in Wärme umzusetzen, dass der mit diesen Komponenten/Materialien ausgestattete Bereich der wärmeschrumpfbaren und passiven Lage erwärmt werden kann. Unter mikroinkapsulierten Ölen sind insbesondere solche Öle zu verstehen, die ein eine Ölflüssigkeit umgebendes Coating aufweisen, das in einem vorbestimmten Temperaturbereich aufschmilzt und das erwärmte Öl freigibt. Das Auftragen des strahlungsempfindlichen Werkstoffes über ein Bedruckungsverfahren stellt eine zur Bedampfung kostengünstige Alternative dar. Dadurch lassen sich die Herstellungskosten für die Verbundfolie und eines daraus geformten Schlauchbeutels minimieren. Für eine den strahlungsempfindlichen Werkstoff aufweisende Farbdruckschicht kann eine weiße Farbe verwendet werden, die sich meist harmonischer in ein farbiges Druckbild der Verpackung einfügen kann als eine metallische/graue Farbe eines Metallpartikelhaltigen strahlungsempfindlichen Werkstoffs. Weiter bevorzugt ist eine transparente Druckschicht, beispielsweise durch Verwendung von transparenten Farbpigmenten und/oder transparenten mikroinkapsulierten Ölen, womit ein Druckbild ohne Berücksichtigung der Farbe des aufzubringenden strahlungsempfindlichen Werkstoffes erreichbar ist. Weiterhin können Sichtfenster auch in Bereichen des strahlungsempfindlichen Werkstoffes vorgesehen werden. Außerdem kann eine Bräunung von Lebensmitteln in einer aus der erfindungsgemäßen Verbundfolie hergestellten Schlauchbeutelverpackung ohne sichtbaren strahlungsempfindlichen Werkstoff erzielt werden.

Besonders bevorzugt werden solche Farbpigmente verwendet, die bei einer Mikrowellenbeaufschlagung zersetzungsresistent sind. Als zersetzungsresistent werden solche Farbpigmente und/oder ein ein Farbpigment umgebendes und diesem zugeordneten Coating zur Stabilisierung einer Farbgrundmatrix angesehen, die eine Molekülstruktur aufweisen, welche sich bei einer Mikrowellenanregung nicht in ihre Molekülbestandteile auflösen bzw. zersetzen und mit den in der Farbflüssigkeit enthaltenden anderen und die Farbpigmente einbettenden Farbkomponenten wie beispielsweise Bindemittel, Lösungsmittel, Füllstoffe oder Additive Verbindungen eingehen. Dadurch kann bei einer Mikrowellenbeaufschlagung zuverlässig eine Bildung von schädlichen oder giftigen Verbindungen in der Oberflächenschicht der Schlauchbeutelverpackung oder von austretenden Dämpfen vermieden werden.

Nach einer weiteren bevorzugten Ausgestaltung der vorliegenden Erfindung ist der strahlungsempfindliche Werkstoff aus der die Metallpartikel aufweisende Schicht und/oder die Druckschicht als ein vorbestimmtes Punkt-, Linien- und/oder Flächenmuster ausgebildet. Dadurch lassen sich auf einfache Weise Bereiche auf der wärmeschrumpfbaren Lage definieren, die bei Wärmestrahlungs- oder Mikrowellenbeaufschlagung verformt werden sollen. Besonders bevorzugt wird dies dadurch erreicht, dass der wärmeempfindliche Kaschierkleber vollflächig über die Verbundfolie vorgesehen ist und dass die Verbundfolie zwischen der ersten und zweiten Lage eine dem Punkt-, Linien- und/oder Flächenmuster gleiche und den strahlungsempfindlichen Werkstoff abdeckende Antihaftbeschichtung aufweist. Eine Antihaftbeschichtung ist im wortüblichen Sinne eine Schicht, mit der eine Haftung der ersten mit der zweiten Lage in den die Antihaftbeschichtung aufweisenden Bereichen vermieden werden soll. Vorzugsweise ist die Antihaftbeschichtung ein aufgedruckter Antihaftlack mit einem den Punkt-, Linien- und/oder Flächenmuster abdeckenden Lackmuster, womit ein vorbestimmtes Verformungsverhalten und somit eine vorbestimmte Form der behandelten Verbundfolie definierbar ist. Damit kann insbesondere eine Herstellung der Schlauchbeutelverpackung aus dem erfindungsgemäßen aus der Verbundfolie bestehenden Verbundmaterial vereinfacht werden, da der Kaschierkleber vollflächig auftragbar ist und für das Muster des strahlungsempfindlichen Werkstoffs und des Antihaftlacks lediglich ein Walzentyp benötigt wird. Die Herstellkosten für das erfindungsgemäße Verbundmaterial können somit gering gehalten werden.

Alternativ hierzu ist in einer weiteren bevorzugten Ausgestaltung der vorliegenden Erfindung der wärmeempfindliche Kaschierkleber insbesondere bei dem aus der Verbundfolie bestehenden Verbundmaterial vollflächig über die Verbundfolie vorgesehen, und die Verbundfolie weist zwischen der ersten und zweiten Lage eine Antihaftbeschichtung mit einem Muster auf, das ein dem Punkt-, Linien- und/oder Flächenmuster des strahlungsempfindlichen Werkstoffs entsprechendes Negativmuster ausbildet. Dadurch werden nur die von dem strahlungsempfindlichen Werkstoff ausgenommenen Bereiche mit der Antihaftbeschichtung, welches vorzugsweise aus einem Antihaftlack besteht, versehen. Die dem ausgesparten strahlungsempfindlichen Werkstoffmuster entsprechenden Bereiche der wärmeschrumpfbaren Lage können sich somit bei Wärmestrahlungs- oder Mikrowellenbeaufschlagung nicht mit der passiven Lage verbinden, womit diese Bereiche frei verformbar sind, während die den strahlungsempfindlichen Werkstoff aufweisenden Bereiche der Verbundfolie vor ihrer Verformung versteifte Bereiche ausbilden.

Als ein vorteilhaftes Punkt-, Linien- und/oder Flächenmuster hat sich insbesondere eine durch eine dünne, durchgehende Linie ausgebildete Reisverschlussform herausgestellt, womit ein höherer Energieertrag erreichbar ist, ohne jedoch aufgrund der großen Fläche eine Überhitzung zu verursachen. Weiterhin ist ein durch ineinandergelagerte, vorzugsweise mit unterschiedlicher Größe und Stärke geformte Kreise oder Ellipsen ausgebildetes Flächenmuster als vorteilhaft anzusehen, da durch die ausgesparten Linienbereiche ebenfalls einer Überhitzungsgefahr vorgebeugt werden kann. Des Weiteren sind bei einem solchen Flächenmuster Teile des Linienbereiches zur Schrumpfrichtung normal ausgerichtet, so dass eine weitere Schrumpfung bewirkt werden kann. Dieser Effekt kann gleichfalls mit einem als vorteilhaft angesehenen Flächenmuster erreicht werden, welches aneinandergereihte Rechtecke mit abgerundeten Ecken aufweist. Als weitere vorteilhafte Alternative für ein Punkt-, Linien- und/oder Flächenmuster werden zwei alternierend schwingende Linien betrachtet, die wenigstens einen Berührungspunkt aufweisen. In einer bevorzugten Ausgestaltung dieses Linienmusters mit mehreren auf einer vorzugsweise geraden Verbindungslinie liegenden Berührungspunkten kann bei Schrumpfung der Verbundfolie eine Innenkante erzeugt werden. Als weiteres vorteilhaftes Linienmuster wird ein durch zwei parallele Linien ausgebildetes Muster angesehen, da sich hierdurch nach Schrumpfung eine abgerundete Kante erzeugen lässt.

Gemäß einer weiteren bevorzugten Ausgestaltung der vorliegenden Erfindung ist die wärmeschrumpfbare Lage aus dem strahlungsempfindlichen Werkstoff ausgebildet. Der strahlungsempfindliche Werkstoff ist vorzugsweise ein gereckter Thermoplast, der eingefrorene Orientierungen aufweist, die sich bei Wärmeeinwirkung durch Wärmestrahlungs- oder Mikrowellenbeaufschlagung rückstellen. Weiterhin ist zwischen der wärmeschrumpfbaren Lage und der passiven Lage der wärmeempfindliche Kaschierkleber vollflächig und eine Antihaftbeschichtung aus einem Antihaftlack mit einem vorbestimmten Lackmuster vorgesehen. Durch den Antihaftlack wird eine Klebewirkung zwischen der wärmeschrumpfbaren und der passiven Lage unterbunden, wodurch die wärmeschrumpfbare Lage in den klebefreien Bereichen, also in den Bereichen, in denen der Antihaftlack vorgesehen ist, bei Wärmestrahlungs- oder Mikrowellenbeaufschlagung aufgrund der Erwärmung der wärmeschrumpfbaren Lage, des wärmeempfindlichen Kaschierklebers und der passiven Lage schrumpfen bzw. sich frei verformen kann. Anstelle des Antihaftlackes kann nach einer weiteren bevorzugten Ausgestaltung der vorliegenden Erfindung der wärmeempfindliche Kaschierkleber derart vorgesehen werden, dass dieser in einem der wärmeschrumpfbaren Lage zugeordneten Bereich vorgesehen wird, der aufgrund der Klebewirkung zwischen der wärmeschrumpfbaren und der passiven Lage frei von einer Verformung bleiben soll.

Mit den beiden vorgenannten Alternativen ist eine Verformung (Schrumpfung) der wärmeempfindlichen Lage bei niedrigeren Temperaturen, vorzugsweise bei ca. 100°C möglich, als bei Verwendung eines strahlungsempfindlichen Werkstoffs, der aus einer Metallpartikelhaltigen Schicht besteht. Dadurch kann der Ausbildung von Microholes in der wärmeschrumpfbaren Lage wirksam begegnet werden. Microholes können dann entstehen, wenn als strahlungsempfindlicher Werkstoff insbesondere Metallpartikel verwendet werden, die sich bei einer Wärmestrahlungs- oder Mikrowellenbeaufschlagung derart erwärmen, dass deren abgestrahlte Wärme über einer Schmelztemperatur der wärmeschrumpfbaren Lage liegt. Durch Vermeidung von solchen Metallpartikeln als strahlungsempfindlicher Werkstoff können insbesondere Herstellungskosten für einen aus dem erfindungsgemäßen aus der Verbundfolie bestehenden Verbundmaterial hergestellten Schlauchbeutels aufgrund des Wegfalls des Metallisierungs- und Demetallisierungsprozesses verringert werden.

Mit der vorliegenden Erfindung wird ferner ein Form-Fill-Seal-Verfahren angegeben, das sich zur Herstellung von Schlauchbeuteln aus dem erfindungsgemäßen, aus der Verbundfolie bestehenden Verbundmaterial eignet. Insbesondere zur Herstellung von Schlauchbeuteln für die Lebensmittelverpackung ist es zu bevorzugen, den strahlungsempfindlichen Werkstoff, sofern dieser eine hinsichtlich der wärmeschrumpfbaren Lage unterschiedliche Komponente aufweist, zwischen der wärmeschrumpfbaren Lage und der passiven Lage anzuordnen, wodurch der strahlungsempfindliche Werkstoff gekapselt ist und nicht direkt mit dem Nahrungsmittel in Verbindung kommt. Besonders bevorzugt kann bei der Herstellung von Schlauchbeuteln für die Lebensmittelverpackung eine wenigstens dreilagige Folie verwendet werden. Die dreilagige Folie ist beispielsweise derart aufgebaut, dass die dem Lebensmittel zugewandte innenliegende Lage eine wärmeschrumpfbare Lage aus orientiertem Polypropylen (OPP), die mittlere eine aus Polyethylenterephthalat (PET) ausgebildete passive Lage und die dem Lebensmittel abgewandte äußere Lage eine aus OPP ausgeformte weitere passive Lage ist. Eine diesen Folienaufbau aufweisende Lebensmittelverpackung sollte aus verfahrenstechnischen Gründen vorzugsweise mit Hilfe der Ultraschallsiegeltechnologie verschlossen werden.

Die vorliegende Erfindung wird nachfolgend anhand eines Ausführungsbeispiels in Verbindung mit der Zeichnung näher erläutert. In dieser zeigt:
- Fig. 1: eine schematische Schnittansicht durch ein Ausführungsbeispiel eines erfin- dungsgemäßen Verbundmaterials, insbesondere einer Verbundfolie vor Wär- mestrahlungs- oder Mikrowellenbeaufschlagung;
- Fig. 2: das in Fig. 1 gezeigte Ausführungsbeispiel nach Wärmestrahlungs- oder Mik- rowellenbeaufschlagung;
- Fig. 3: eine perspektivische Seitenansicht eines nach einem Form-Fill-Seal-Verfahren hergestellten Schlauchbeutels aus einem erfindungsgemäßen, aus einer Ver- bundfolie bestehenden Verbundmaterial nach Wärmestrahlungs- oder Mikro- wellenbeaufschlagung; und
- Fig. 4A bis Fig. 4F: Beispiele von Punkt-, Linien- und Flächenmustern für ein strah- lungsempfindliches Werkstoffmuster und/oder ein Antihaftbeschichtungsmus- ter.

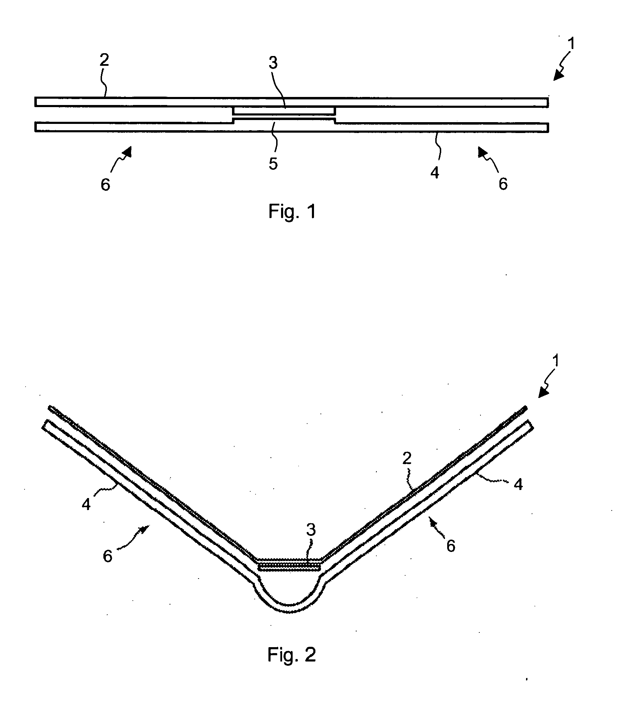

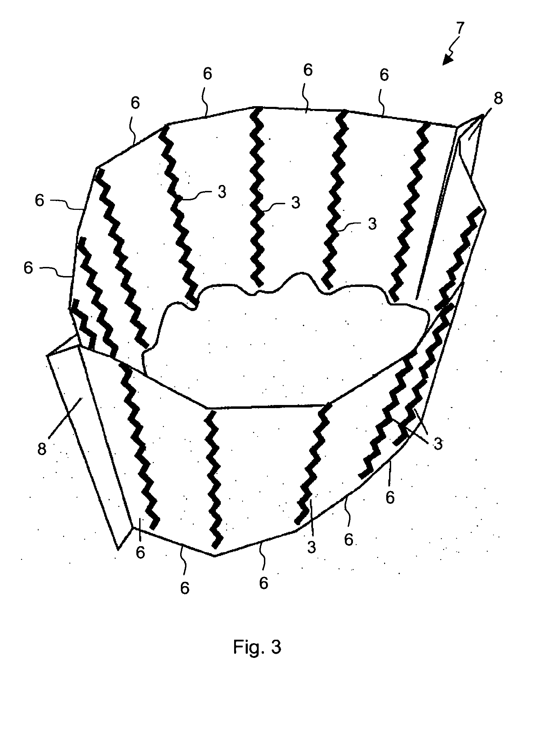

Fig. 1 zeigt eine Schnittansicht eines Ausführungsbeispiels eines aus einer Verbundfolie 1 bestehenden Verbundmaterials vor einer Wärmestrahlungs- oder Mikrowellenbeaufschlagung, die zur Herstellung des in der Fig. 3 gezeigten Schlauchbeutels 7 verwendet wurde. Die Verbundfolie 1 umfasst eine erste Lage 2, die eine wärmeschrumpfbare Lage ist, und eine zweite Lage 4, die eine passive Lage ist. Die wärmeschrumpfbare Lage 2 ist mit der passiven Lage 4 mittels eines wärmeempfindlichen Kaschierklebers (nicht dargestellt) verklebt. An vorbestimmter Stelle ist ein strahlungsempfindlicher Werkstoff 3 vorgesehen, der bei dem gezeigten Ausführungsbeispiel direkt auf die wärmeschrumpfbare Lage 2 aufgedruckt wurde. Zwischen dem strahlungsempfindlichen Werkstoff 3 und der passiven Lage 4 befindet sich eine Antihaftbeschichtung 5 in einer Breite, die in etwa der Abmessung des mikrowellenempfindlichen Werkstoffes 3 entspricht.

Nach Wärmestrahlungs- oder Mikrowellenbeaufschlagung (vgl. Fig. 2) hat sich die wärmeschrumpfbare Lage 2 zusammengezogen. Die gereckten, bei idealisierter Betrachtung zunächst im Wesentlichen parallel zueinander verlaufenden Molekülketten der wärmeschrumpfbaren Lage 2 erstrecken sich in Ebenen, die parallel zu der Zeichenebene verlaufen. Dementsprechend ist nach Wärmestrahlungs- oder Mikrowellenbeaufschlagung die wärmeschrumpfbare Lage 2 in der Zeichenebene verkürzt. Weiterhin führt die Wärmestrahlungs- oder Mikrowellenbeaufschlagung auch zu einer Verformung der Verbundfolie 1 derart, dass die zweidimensionale Form verlassen wird. So führt die Zugbeanspruchung der wärmeschrumpfbaren Lage 2 zusätzlich dazu, dass benachbarte Wandabschnitte 6 der Verbundfolie auf der Seite der wärmeschrumpfbaren Lage 2 aufeinander zu geschwenkt werden.

Fig. 3 zeigt einen Schlauchbeutel, der mit einem Form-Fill-Seal-Verfahren, wie beispielsweise aus der DE 199 57 891 A1 bekannt, unter Verwendung des erfindungsgemäßen, aus einer Verbundfolie bestehenden Verbundmaterials hergestellt wurde. Es wird eine zunächst als ebene Bahn zugeführte Verbundfolie über eine Formschulter umgeformt, und zwar zu einem in Umfangsrichtung geschlossenen Schlauch. Die umgeformte Endlosbahn wird durch eine Längsschweißnaht in Umfangsrichtung geschlossen. Hierbei kommt üblicherweise eine Längsschweiß-vorrichtung zum Einsatz, die gegen ein Füllrohr wirkt, welches an seinem oberen Ende die Formschulter ausbilden kann. Danach ist der Schlauch umfänglich geschlossen. Es folgt das Ausbilden einer unteren Querschweißnaht, üblicherweise mit einer Vorrichtung, die auch die obere Querschweißnaht des zuvor gefertigten Beutels bildet und die zwischen den jeweiligen oberen und unteren Schweißbacken üblicherweise eine Schneideinrichtung aufweist, um den beidseitig geschlossenen Schlauchbeutel von dem endlos zugeführten Material abzutrennen. Die Querschweißeinrichtung kann zyklisch hin- und herbewegt werden und somit beim Ausbilden der Schweißnaht kontinuierlich mit der zugeführten Bahn mitlaufen. Alternativ kann die Zuführbewegung auch beim jeweiligen Ausbilden der Querschweißnaht gestoppt werden.

Fig. 3 zeigt den nach dem vorbeschriebenen Form-Fill-Seal-Verfahren erhaltenen Schlauchbeutel 7 unter Verwendung eines erfindungsgemäßen, aus einer Verbundfolie bestehenden Verbundmaterials. Der Schlauchbeutel 7 ist vollständig geschlossen und mit einem versteiften Bodenbereich (nicht dargestellt) versehen. Der Beutel kann beispielsweise zur Verpackung von Knabbergebäck benutzt werden. Zur Darreichung des Knabbergebäcks wird der Benutzer den gefüllten Schlauchbeutel in einer Weise anordnen, dass der Bodenabschnitt des Schlauchbeutels 7 mit den dem Bodenabschnitt zugeordneten Kanten der Querschweißnaht 8 eine verstärkte Standfläche des Schlauchbeutels 7 ausbildet. Der strahlungsempfindliche Werkstoff 3, beispielsweise durch einen metallischen Werkstoff wie Aluminium ausgebildet, erstreckt sich linienartig in der Vertikalen. Der strahlungsempfindliche Werkstoff 3 ist auf einer Außenseite der wärmeschrumpfbaren Lage angeordnet, wobei die wärmeschrumpfbare Lage aus orientiertem Polypropylen (OPP) ausgeformt und außenseitig mit einer passiven Lage aus Polyethylenterephthalat (PET) verbunden ist. Alternativ ist die wärmeschrumpfbare Lage aus PET und die passive Lage aus OPP ausgeformt. Bei einer Wärmestrahlungs- oder Mikrowellenbeaufschlagung in einem Backofen oder Mikrowellenofen erwärmt sich der strahlungsempfindliche Werkstoff 3. Die schrumpfbare Polypropylen-Lage wird dadurch gleichfalls erwärmt. Die in dem gereckten Polypropylen eingefrorenen Orientierungen werden zurückgestellt. Dementsprechend schrumpft die Verbundfolie in vorbestimmter Weise im Bereich des strahlungsempfindlichen Werkstoffs 3. Die äußere PET-Lage ist überwiegend mit der PP-Lage mittels eines wärmeempfindlichen Kaschierklebers verklebt. Bei Wärmestrahlungs- oder Mikrowellenbeaufschlagung entfaltet der wärmeempfindliche Kaschierkleber seine Klebewirkung, indem sich seine Oberflächenmoleküle mit den Oberflächenmolekülen der Polypropylen-Lage und der PET-Lage verbinden. Dadurch erhöht sich die Klebewirkung des wärmeempfindlichen Kaschierklebers und führt in diesen Bereichen der Verbundfolie zu einer hinreichenden Steifigkeit und Stabilität bereits während der Wärmestrahlungs- oder Mikrowellenbeaufschlagung. Im Bereich des strahlungsempfindlichen Werkstoffs 3, d.h. im Bereich der Linien 3, wird jedoch keine Klebewirkung entweder beispielsweise durch Aussparung des strahlungsempfindlichen Werkstoffes 3 oder durch Anordnung eines Antihaftlackes, der den strahlungsempfindlichen Werkstoff 3 überdeckt, erzielt. Dementsprechend kann sich die wärmeschrumpfbare PP-Lage durch Wärmestrahlungs- oder Mikrowellenbeaufschlagung zusammenziehen. Die äußere PET-Lage wölbt sich in diesen Bereichen jeweils nach außen. Es ergeben sich durch Wärmestrahlungs- oder Mikrowellenbeaufschlagung ausgebildete Kanten und dazwischen angeordnete, im Wesentlichen ebene Wandabschnitte 6. Der dadurch gebildete Behälter 7 ist oben offen und allein durch das Verbundfolienmaterial gebildet, welches aber aufgrund der Wärmestrahlungs- oder Mikrowellenbeaufschlagung durch den wärmeempfindlichen Kaschierkleber und zusätzlich durch Querschweißnähte 8 versteift ist, so dass der Behälter 7 sich zur Darreichung des in dem Behälter 7 enthaltenen Knabbergebäcks eignet. Geeignet ist auch ein zweilagiger Aufbau mit einer innenliegenden wärmeschrumpfbaren Lage aus PP oder PET und einer aus PET SiOₓ, PP SiOₓ, PP oder PET ausgebildeten passiven Lage. Optional ist die PET SiOₓ- bzw. PET-Lage außenseitig oder die wärmeschrumpfbare Lage aus PET innenseitig mit einer PP Siegelfolienlage verbunden.

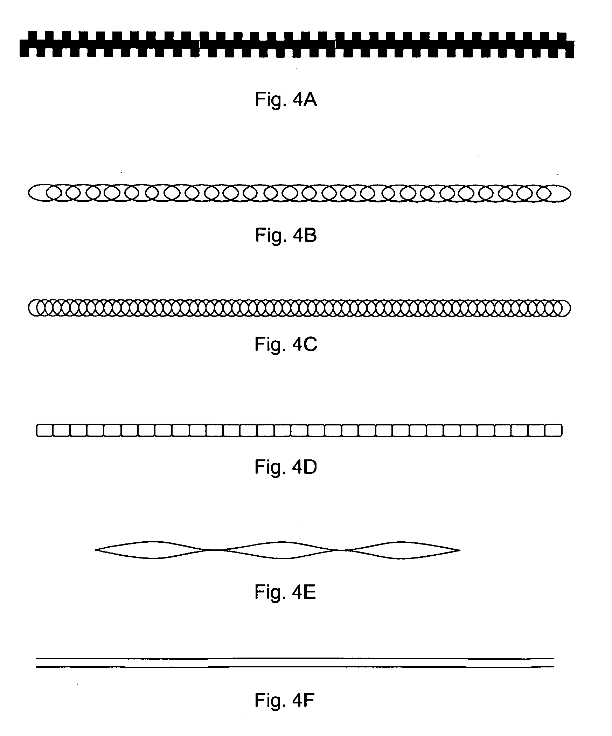

Figuren 4A bis 4F zeigen verschiedenartige Punkt-, Linien- und Flächenmuster für ein strahlungsempfindliches Werkstoff- oder ein Antihaftbeschichtungsmuster. Mit Fig. 4A wird ein Reißverschlussmuster gezeigt, welches aus einer dünnen, durchgehenden Linie erzielt wird. Mit einem solchem Muster kann ein höherer Energieertrag erreicht werden, ohne jedoch aufgrund der großen Fläche eine Überhitzung zu verursachen. Die Fig. 4B und Fig. 4C zeigen ein Flächenmuster aus ineinandergelagerten, mit anderen Worten sich überschneidenden Ellipsen und Kreise. Die Stärke und Größe der Ellipsen und Kreise können variieren, auch wenn die Figuren 4B und 4C im wesentlichen Ellipsen und Kreise mit gleicher Stärke und Größe darstellen. Solche Flächenmuster verhindern im wesentlichen die Gefahr einer Überhitzung aufgrund der ausgesparten Linienbereiche. Des Weiteren sind bei einem solchen Flächenmuster Teile des Linienbereiches zur Schrumpfrichtung normal ausgerichtet, so dass eine weitere Schrumpfung bewirkt werden kann. Dieser Effekt kann gleichfalls mit einen in Fig. 4D gezeigten Muster aus mehreren aneinandergereihten Rechtecken mit abgerundeten Ecken erzielt werden: Fig. 4E zeigt ein Linienmuster aus zwei alternierend schwingenden Linien, die mehrere gemeinsame Berührungspunkte aufweisen. Dadurch lässt sich bei Schrumpfung der wärmeschrumpfbaren Lage auf einfache Weise eine Innenkante erzeugen. Fig. 4F zeigt ein Linienmuster aus zwei parallel zueinander angeordneten Linien, woraus sich nach Schrumpfung eine abgerundete Kante ergibt.

Die vorliegende Erfindung wurde im wesentlichen mit Blick auf einen eine Lebensmittelverpackung ausbildenden Schlauchbeutel beschrieben, der aus einem aus einer Verbundfolie bestehenden Verbundmaterial hergestellt wurde. Das erfindungsgemäße Verbundmaterial, insbesondere das aus einem Kartonverbund bestehende Verbundmaterial kann beispielsweise für Faltschachteln, für Lebensmittelverpackungen wie eine Knusper Box, bei welcher sich die Verpackung um das Füllgut anlegt und so ein knuspriges Füllgut schafft, oder für Becherummantelungen Verwendung finden, bei welchem sich während der Wärmezufuhr Griffe von dem Becher aufstellen und somit ein einfaches Tragen des Bechers ermöglichen, ohne mit der warmen Becheraußenseite in Berührung zu gelangen. Des Weiteren lassen sich durch das erfindungsgemäße Verbundmaterial Dekorationsartikel und Werbemittel herstellen.

### Bezugszeichenliste

- 1: Verbundfolie
- 2: wärmeschrumpfbare Lage
- 3: strahlungsempfindlicher Werkstoff
- 4: passive Lage
- 5: Antihaftbeschichtung
- 6: Wandabschnitt
- 7: Schlauchbeutel
- 8: Querschweißnaht

## Patentansprüche

1. Verbundmaterial bestehend aus einer Verbundfolie zur Herstellung eines Schlauchbeutels (7) nach einem Form-Fill-Seal-Verfahren oder aus einem Kartonverbund, wobei das Verbundmaterial eine erste Lage (2), einen strahlungsempfindlichen Werkstoff (3) und eine zweite Lage (4) aufweist, die mit der ersten Lage (2) über einen wärmeempfindlichen Kaschierkleber verbunden ist, der in einem Bereich des strahlungsempfindlichen Werkstoffes (3) und/oder in einem von dem strahlungsempfindlichen Werkstoff (3) ausgesparten Bereich vorgesehen ist und bei Wärmezufuhr durch Wärmestrahlungs- oder Mikrowellenbeaufschlagung eine erhöhte Klebewirkung ausbildet.

2. Verbundmaterial nach Anspruch 1, **dadurch gekennzeichnet, dass** die erste Lage eine wärmeschrumpfbare Lage (2) und die zweite Lage eine passive Lage (4) ist, die miteinander derart verbunden sind, dass das Verbundmaterial (1) bei Wärmestrahlungs- oder Mikrowellenbeaufschlagung in vorbestimmter Weise umgeformt wird.

3. Verbundmaterial nach Anspruch 2, **dadurch gekennzeichnet, dass** das Verbundmaterial aus dem Kartonverbund besteht, wobei die passive Lage eine Karton- und/oder Papierlage und die wärmeschrumpfbare Lage eine Folienlage ist.

4. Verbundmaterial nach Anspruch 3, **dadurch gekennzeichnet, dass** die Karton- und/oder Papierlage mehrere Einschnitte und/oder Punktierungen aufweist.

5. Verbundmaterial nach einem der vorherigen Ansprüche**, dadurch gekennzeichnet, dass** der strahlungsempfindliche Werkstoff (3) aus einer eine Metallpartikel aufweisende Schicht und/oder aus einer Druckschicht ausgebildet und der ersten Lage (2) zugeordnet ist.

6. Verbundmaterial nach Anspruch 5, **dadurch gekennzeichnet, dass** die Druckschicht wenigstens metallpartikelhaltige oder leitfähige Komponenten, Halbleiter, elektrisch leitende und/oder nichtleitende Komponenten, Dipol ausbildende Komponenten, Farbpigmente, mikroinkapsulierte Öle oder eine Kombination dieser Komponenten umfasst.

7. Verbundmaterial nach Anspruch 6, **dadurch gekennzeichnet, dass** die die Metallpartikel aufweisende Schicht und/oder die Druckschicht in Form eines vorbestimmten Punkt-, Linien- und/oder Flächenmusters ausgebildet sind.

8. Verbundmaterial nach Anspruch 7, **dadurch gekennzeichnet, dass** das Verbundmaterial aus der Verbundfolie (1) besteht, bei welcher der Kaschierkleber vollflächig über die Verbundfolie (1) vorgesehen ist, und dass die Verbundfolie (1) zwischen der ersten und zweiten Lage (2, 4) eine dem Punkt-, Linien- und/oder Flächenmuster gleiche und den strahlungsempfindlichen Werkstoff (3) abdeckende Antihaftbeschichtung (5) aufweist.

9. Verbundmaterial nach Anspruch 7, **dadurch gekennzeichnet, dass** der Kaschierkleber vollflächig über die Verbundfolie (1) vorgesehen ist und dass eine Antihaftbeschichtung (5) in einem von dem strahlungsempfindlichen Werkstoff (3) ausgesparten Bereich zwischen der ersten und zweiten Lage (2, 4) der Verbundfolie (1) vorgesehen ist.

10. Verbundmaterial nach einem der vorherigen Ansprüche 7 bis 9, **dadurch gekennzeichnet, dass** das Punkt-, Linien- und/oder Flächenmuster wenigstens durch ein Reisverschlussmuster und/oder ein durch mindestens zwei ineinandergelagerte Kreise oder Ellipsen, durch wenigstens zwei aneinandergereihte Rechtecke mit abgerundeten Ecken, durch zwei alternierend schwingende Linien mit mehreren Berührungspunkten und/oder durch zwei parallele Linien ausgebildetes Muster ausgeformt ist.

11. Verbundmaterial nach Anspruch 2, **dadurch gekennzeichnet, dass** das Verbundmaterial aus der Verbundfolie (1) besteht, bei welcher die wärmeschrumpfbare Lage (2) aus dem strahlungsempfindlichen Werkstoff ausgebildet ist und dass zwischen der wärmeschrumpfbaren Lage (2) und der passiven Lage (4) der wärmeempfindliche Kaschierkleber vollflächig sowie eine Antihaftbeschichtung (5) aus einem Antihaftlack mit einem vorbestimmten Lackmuster vorgesehen sind.

12. Verbundmaterial nach Anspruch 2, **dadurch gekennzeichnet, dass** das Verbundmaterial aus der Verbundfolie (1) besteht, bei welcher die wärmeschrumpfbare Lage (2) aus dem strahlungsempfindlichen Werkstoff ausgebildet ist und dass zwischen der wärmeschrumpfbaren Lage (2) und der passiven Lage (4) der wärmeempfindliche Kaschierkleber in einem der wärmeschrumpfbaren Lage (2) zugeordneten Bereich vorgesehen ist, der frei von einer Verformung bleibt.

13. Verbundmaterial nach einem der Ansprüche 1 bis 12, **dadurch gekennzeichnet, dass** die Verbundfolie wenigstens dreilagig ausgeformt ist, wobei die dem Schüttgut zugewandte innenliegende Folienlage eine wärmeschrumpfbare Lage aus orientiertem Polypropylen, die mittlere Lage eine passive Lage aus Polyethylenterephthalat und die äußere Lage eine weitere passive Lage aus orientiertem Polypropylen ist.

14. Verbundmaterial nach einem der Ansprüche 1 bis 12, **dadurch gekennzeichnet, dass** die Verbundfolie wenigstens dreilagig aufgebaut ist, wobei die die dem Schüttgut zugewandte innenliegende Folienlage eine passive Lage aus Polypropylen, die mittlere Lage eine wärmeschrumpfbare Lage aus Polyethylenterephthalat und die äußere Lage eine weitere passive Lage aus orientiertem Polypropylen ist.

15. Form-Fill-Seal-Verfahren zur Herstellung eines Schlauchbeutels, bei dem zunächst eine ebene Bahn einer Verbundfolie über eine Formschulter geformt und durch eine Längsschweißnaht zu einem Schlauch gebildet wird, die sich in Zuführrichtung des Schlauches erstreckt, Schüttgut in einen Längsabschnitt des Schlauches eingefüllt und der ober- und unterseitig durch Querschweißnähte geschlossene Längenabschnitt als gefüllter Schlauchbeutel von dem zugeführten Hüllstoff abgetrennt wird, **dadurch gekennzeichnet, dass** ein Verbundmaterial bestehend aus einer Verbundfolie mit den Merkmalen nach einem der Ansprüche 1, 2 und 5 bis 14 verwendet wird.
